# EUROPEAN PATENT SPECIFICATION

(11) **EP 4 248 415 B1**
(45) Date of publication and mention of the grant of the patent: **07.10.2026**
(21) Application number: 22705960.7
(22) Date of filing: 04.02.2022
(51) Int. Cl.: G06V 20/40, G06V 10/82, G06V 10/74

(54) **AUTOMATED VIDEO AND AUDIO ANNOTATION TECHNIQUES**
AUTOMATISIERTE VIDEO- UND AUDIO-KOMMENTARTECHNIKEN
TECHNIQUES AUTOMATISÉES D'ANNOTATION VIDÉO ET AUDIO

(43) Date of publication of application: 27.09.2023
(73) Proprietor: Google LLC, Mountain View, CA 94043 (US)
(72) Inventor: SCHMID, Cordelia Luise, 38240 Meylan (FR); MANEN FREIXA, Santiago, 8002 Zurich (CH); HAUTH, Anja, 8002 Zurich (CH); SEYBOLD, Bryan, Andrew, Mountain View, California 94043 (US); NAGRANI, Arsha, Mountain View, California 94043 (US); SEO, Hongsuck, 38240 Meylan (FR); SUN, Chen, Mountain View, California 94043 (US)
(74) Representative: Trichard, Louis
(86) International application number: PCT/US2022/015328
(87) International publication number: WO 2023/149898

(56) References cited:
- WO-A1-2021/167632
- US-A1- 2021 012 150
- DU XIAO-YU ET AL: "Captioning Videos Using Large-Scale Image Corpus", JOURNAL OF COMPUTER SCIENCE AND TECHNOLOGY, SPRINGER SINGAPORE, SINGAPORE, vol. 32, no. 3, 12 May 2017 (2017-05-12), pages 480 - 493, XP036232861, ISSN: 1000-9000, [retrieved on 20170512], DOI: 10.1007/S11390-017-1738-7
- JACOB DEVLIN ET AL: "Exploring Nearest Neighbor Approaches for Image Captioning", ARXIV.ORG, CORNELL UNIVERSITY LIBRARY, 201 OLIN LIBRARY CORNELL UNIVERSITY ITHACA, NY 14853, 18 May 2015 (2015-05-18), XP080982954
- VLADIMIR IASHIN ET AL: "Multi-modal Dense Video Captioning", ARXIV.ORG, CORNELL UNIVERSITY LIBRARY, 201 OLIN LIBRARY CORNELL UNIVERSITY ITHACA, NY 14853, 17 March 2020 (2020-03-17), XP081623342
- AMIRIAN SOHEYLA ET AL: "Automatic Image and Video Caption Generation With Deep Learning: A Concise Review and Algorithmic Overlap", IEEE ACCESS, IEEE, USA, vol. 8, 4 December 2020 (2020-12-04), pages 218386 - 218400, XP011825561, DOI: 10.1109/ACCESS.2020.3042484

## Description

### FIELD

The present disclosure relates generally to techniques for training machine-learned models for annotating video data. More particularly, the present disclosure relates to systems and methods for generating descriptions of video frames by leveraging captions of visually similar images.

### BACKGROUND

It can be difficult to provide descriptive captions of events in videos partly because of a lack of appropriate data for training such systems. Du Xiao-Yu et. al.: "Captioning Videos Using Large-Scale Image Corpus", Journal of Computer Science and Technology, Springer Singapore, vol. 32, no. 3, 12 May 2017, pages 480-493, XP036232861 describes captioning videos using large-scale image corpus based on visual hashing techniques to efficiently index and search large-scale images for relevant captions, which is of high extensibility to evolving data and the corresponding semantics. Additionally, labeling events in video can require significant time, effort, and/or computational expenditure. The difficulties can be generally much higher than labeling images for many reasons. First, it is unclear when in time a video changes from one event to another, therefore reviewing many frames of the same event can be redundant. Additionally, viewpoint variability can be greater, image quality can be lower, and framing can be different in videos than in still photography images, therefore more data is typically required to recognize events in videos. Partly because of these challenges in labeling videos, it can be prohibitively expensive to train systems for providing descriptive captions of events in videos. Therefore, improving the efficiency of data labeling, thereby improving training machine-learned models and systems, is needed for improved scalability and usability.

### SUMMARY

Aspects and advantages of embodiments of the present disclosure will be set forth in part in the following description, or can be learned from the description, or can be learned through practice of the embodiments.

One example aspect of the present disclosure is directed to a computer-implemented method for improving a retrieval system. The method can include obtaining, by a computing system, a captioned image. The captioned image can have an image and an associated caption. Additionally, the method can obtain, by the computing system, a first video from a set of videos. The first video can have a plurality of frames. Each video in the set of videos have an index score for the associated caption, and obtaining the first video further including: obtaining, by the computing system, a set of images from an image captioning dataset, the set of images having the captioned image; and selecting the first video from the set of videos based on index score of the first video for the associated caption. Moreover, the method can include determining, by the computing system, a feature vector of the captioned image. Furthermore, the method can include determining, by the computing system, a feature vector of a first frame in the plurality of frames of the first video. The method can also include calculating, by the computing system, a similarity value between the captioned image and the first frame based on the feature vector of the captioned image and the feature vector of the first frame. Subsequently, the method can include transferring, by the computing system, the associated caption to the first frame based on the similarity value.

Another example aspect of the present disclosure is directed to a computer-implemented method for improving a retrieval system. The method can include a obtaining, by a computing system, a captioned image with an associated caption. Additionally, the method can include obtaining, by the computing system, a first video, the first video having a plurality of frames. Each video in the set of videos have an index score for the associated caption, and obtaining the first video further including: obtaining, by the computing system, a set of images from an image captioning dataset, the set of images having the captioned image; and selecting the first video from the set of videos based on index score of the first video for the associated caption. Moreover, the method can include determining, by the computing system, a feature vector of the captioned image. Furthermore, the method can include determining, by the computing system, a feature vector of a first frame in the plurality of frames of the first video. Subsequently, the method can include calculating, by the computing system, a similarity value between the captioned image and the first frame based on the feature vector of the captioned image and the feature vector of the first frame. The method can also include labeling, by the computing system, the first frame with an associated caption that is similar to the associated caption of the captioned image based on the similarity value.

Another example aspect of the present disclosure is directed to a computing system having one or more processors and one or more non-transitory computer-readable media that collectively store a machine learning model, a video captioning database, and instructions that, when executed by the one or more processors, cause the computing system to perform operations. The operations can include obtaining, from an image captioning database, a captioned image with an associated caption. Additionally, the operations can include obtaining a first video, the first video having a plurality of frames. Each video in the set of videos have an index score for the associated caption, and obtaining the first video further including: obtaining, by the computing system, a set of images from an image captioning dataset, the set of images having the captioned image; and selecting the first video from the set of videos based on index score of the first video for the associated caption. Moreover, the operations can include determining a feature vector of the captioned image. Furthermore, the operations can include determining a feature vector of a first frame in the plurality of frames of the first video. Subsequently, the operations can include calculating a similarity value between the captioned image and the first frame based on the feature vector of the captioned image and the feature vector of the first frame. The operations can also include labeling the first frame with an associated caption that is similar to the associated caption of the captioned image based on the similarity value.

Another example aspect of the present disclosure is directed to one or more non-transitory computer-readable media that collectively store a machine learning model. The operations can include obtaining, from an image captioning database, a captioned image with an associated caption. Additionally, the operations can include obtaining a first video, the first video having a plurality of frames. Each video in the set of videos have an index score for the associated caption, and the operations of obtaining the first video further including: obtaining, by the computing system, a set of images from an image captioning dataset, the set of images having the captioned image; and selecting the first video from the set of videos based on index score of the first video for the associated caption. Moreover, the operations can include determining a feature vector of the captioned image. Furthermore, the operations can include determining a feature vector of a first frame in the plurality of frames of the first video. Subsequently, the operations can include calculating a similarity value between the captioned image and the first frame based on the feature vector of the captioned image and the feature vector of the first frame. The operations can also include labeling the first frame with an associated caption that is similar to the associated caption of the captioned image based on the similarity value.

In some instances, the method can include generating a video clip of the first video based on the first frame. Additionally, the method can include storing the video clip in a video captioning database, the video clip being associated with the labeled caption. Moreover, the method can include receiving a user input, from a user device. The user input can indicate a video request associated with the labeled caption. Furthermore, the method can include presenting, on a user interface of the user device, the video clip in response to receiving the user input.

In some instances, the method can include determining a match threshold value based on a number of video clips stored in the video captioning dataset that are associated with the labeled caption. The first frame can be labeled with the labeled caption when the similarity value exceeds the match threshold value.

In some instances, the similarity value can be calculated by determining an L2-distance between the feature vector of the first frame and the feature vector of the captioned image. Additionally, the similarity value can be calculated using an artificial neural network trained on image classification. Moreover, the similarity value can be calculated using a dot product similarity technique.

In some instances, the method can include determining, by the computing system, a feature vector of a second frame in the plurality of frames of the first video. Additionally, the method can include calculating, by the computing system, a second similarity value between the captioned image and the second frame based on a comparison between the feature vector of the captioned image and the feature vector of the second frame. Moreover, the method can include labeling, by the computing system, the second frame with the labeled caption when the second similarity value exceeds a match threshold value. Furthermore, the feature vector of the second frame can be further determined based on the feature vector of the first frame.

In some instances, the plurality of frames of the first video can be generated based on a first video frame rate, and the method can further include selecting the second frame based on a reduced video frame rate, the reduced video frame rate being less than the first video frame rate.

In some instances, the first frame can include a first timestamp, and the second frame can include a second timestamp. The method can further include determining a time span based on the first timestamp and the second timestamp. Additionally, the method can include generating a video clip of the first video, wherein the first video is shortened based on the time span to generate the video clip. Moreover, the method can include labeling the video clip with the labeled caption.

In some instances, the method can include accessing a lookup table based on the associated caption, the lookup table having a plurality of captions that are related to the associated caption. Additionally, the method can include labeling, using the lookup table, the first frame with a new caption from the plurality of captions.

In some instances, the method can include determining that a third frame of the first video does not have a caption. Additionally, the method can include generating a new video based on the first video, wherein the third frame is deleted from the first video to generate the new video.

In some instances, the method can include generating, by the computing system, an audio file of the first video based on the first frame, the audio file being associated with the labeled caption. Additionally, the method can include receiving a user input, from a user device, the user input indicating an audio request associated with the labeled caption. Furthermore, the method can include outputting, on a speaker of the user device, the audio file in response to receiving the user input.

In some instances, the method can include obtaining, by the computing system, a set of images from an image captioning dataset, the set of images having the captioned image. Additionally, the method can include obtaining, by the computing system, a set of videos from a video repository (e.g., public domain). The set of videos having the first video. Each video in the set of videos having a plurality of frames.

In some instances, the method can include selecting, by the computing system, a second video from the set of videos. Additionally, the method can include extracting, by the computing system, a feature vector of a new frame of the second video. Moreover, the method can include calculating, by the computing system, anew similarity value between the captioned image and the new frame based on the feature vector of the captioned image and the feature vector of the new frame. Furthermore, the method can include labeling, by the computing system, the new frame with an associated caption that is similar to the associated caption of the captioned image based on the new similarity value.

In another example aspect, there is provided a system including one or more processors and a memory, the memory storing computer readable instructions that, when executed by the one or more processors, cause the system to perform the operations of the computer implemented method and/or method aspects, modifications thereto, combinations thereof, and/or as described herein.

In another example aspect, there is provided a computer program product comprising computer readable instructions that, when executed by a computing apparatus, cause the computing apparatus to perform the operations of any of the computer implemented method and/or method aspects, modifications thereto, combinations thereof, and/or as described herein.

Other aspects of the present disclosure are directed to various systems, apparatuses, non-transitory computer-readable media, user interfaces, and electronic devices.

These and other features, aspects, and advantages of various embodiments of the present disclosure will become better understood with reference to the following description and appended claims. The accompanying drawings, which are incorporated in and constitute a part of this specification, illustrate example embodiments of the present disclosure and, together with the description, serve to explain the related principles.

### BRIEF DESCRIPTION OF THE DRAWINGS

Detailed discussion of embodiments directed to one of ordinary skill in the art is set forth in the specification, which makes reference to the appended figures, in which:
Figure 1A depicts a block diagram of an example computing system according to example embodiments of the present disclosure.
Figure 1B depicts a block diagram of an example computing device according to example embodiments of the present disclosure.
Figure 1C depicts a block diagram of an example computing device according to example embodiments of the present disclosure.
FIG. 2 is a block diagram of an annotation system, according to example embodiments of the present disclosure.
FIG. 3A depicts a diagram of an example of automatically mining audio-video clips and labeling the clips with a caption, according to example embodiments of the present disclosure.
FIG. 3B depicts a diagram of another example of automatically mining audio-video clips and labeling the clips with a caption, according to example embodiments of the present disclosure.
FIG. 3C depicts a diagram of example results of captioning video clips using the annotation system, according to example embodiments of the present disclosure.
Figure 4 depicts a flow chart diagram of an example method to label a video using an annotation system, according to example embodiments of the present disclosure.
Figure 5 depicts a flow chart diagram of an example method to generate and present a video clip, according to example embodiments of the present disclosure.
Figure 6 depicts a flow chart diagram of an example method to generate and label a video clip, according to example embodiments of the present disclosure.

Reference numerals that are repeated across plural figures are intended to identify the same features in various implementations.

### DETAILED DESCRIPTION

A major challenge in text-video and text-audio retrieval is the lack of large-scale, high quality training data. In contrast, the training datasets for image-captioning are in the order of millions of samples. Techniques described herein utilize an annotation system to increase the amount of high-quality training data for video data by automatically transferring captions from image captioning datasets to video clips without human intervention. The annotation system, which can include a video mining pipeline, can create a new large-scale audio-video captioning dataset consisting of millions of paired clips and captions. Additionally, empirical evidence shows that training a dual-stream text-video model on this newly created dataset can achieve competitive performance on video retrieval and video captioning, matching and outperforming other video captioning training datasets. Furthermore, the mined clips can also be suitable for text-audio pretraining and achieve state of the art results for the task of audio retrieval.

A key facet of human intelligence can be the ability to effortlessly connect the visual and auditory world to natural language concepts. Bridging the gap between human perception (e.g., visual, auditory and tactile) and communication (e.g., language) is becoming an increasingly important goal for artificial agents, enabling tasks such as text-to-visual retrieval, image and video captioning, and visual question answering. In the image domain in particular, this demand has led to an explosion of large-scale image datasets with natural language descriptions.

In the video and audio domains, however, the focus has been directed at modeling, either in developing new architectures or new training objectives. There has been a lack of focus on generating the underlying data used to train and evaluate models. Additionally, annotating videos manually with clean and diverse captions is often subjective, painstaking and expensive. As a result, most current video-captioning datasets are small in size (e.g., in the order of magnitude of about 100,000). Furthermore, audio captioning datasets can be even smaller. In order to improve performance of the machine learning model, the amount of training data to train the model should be in the millions of data samples, which may be too computationally expensive to generate using conventional systems. Additionally, as previously discussed, conventional systems may require human input for annotating the video or reviewing automatically generated annotations. Techniques described herein allow for the automatic labeling of a large set of data (e.g., video, audio) that is fast, accurate, and without the need of human input for labeling.

Conventional systems to create video captioning training data can include using Automatic Speech Recognition (ASR) in instructional videos. However, the pitfalls of using ASR are well known, which include: (i) noise in imperfect ASR transcription; (ii) continuous narration may consist of incomplete or grammatically incorrect sentences; (iii) the domain is often limited to instructional videos to increase relevance between speech and video content; and (iv) ASR may not be temporally aligned with the video or may not refer to the video at all.

In contrast, image annotation is computationally cheaper than video. Additionally, large-scale image-text pretrained models are available online. Utilizing text-image models can be valuable, especially with the annotation system leveraging some of the benefits of video.

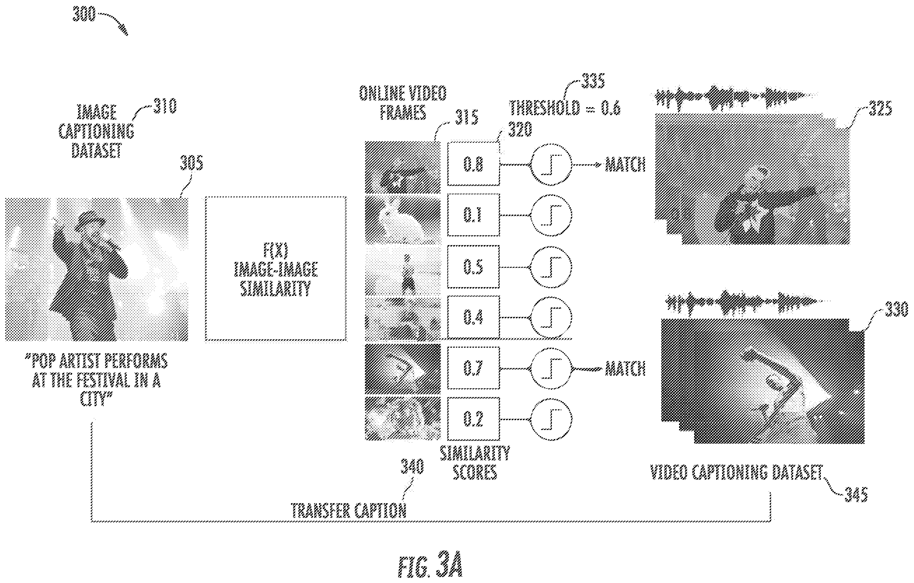

According to some embodiments, the annotation system can utilize a video mining method based on cross-modal transfer. In some instances, the annotation system can use images from image captioning datasets as seeds to find similar video clips in videos online, as illustrated in FIGS. 3A-3C. Subsequently, the annotation system can transfer the image captions directly to the video clips that are determined to be similar, and thus generating video and audio training datasets in a supervised learning process. For example, human-generated captions for images can be utilized for other modalities (e.g., video, audio). To illustrate, the caption 'person throws a pitch during a game against university' from an image captioning dataset may have been written for a single, and/or still image, but the caption can also describe motion that would occur in a video. Similarly, the caption 'a person singing a song' can also infer a potential audio track.

The annotation system can generate dataset samples in an entirely automatic, and without any manual input. Additionally, the dataset samples can be more diverse than conventional dataset samples by consisting of well-formed captions containing at least one frame that is aligned with the text caption.

The annotation system provides for a new, scalable video-mining pipeline which transfers captioning supervision from image datasets to video and audio. Additionally, the video-mining pipeline can curate a new video-text dataset by using any available image captioning dataset as a seed dataset. The video-text dataset can consist of millions of paired video clips with text captions. Additionally, models trained on the video-text dataset perform on par with or better than those pre-trained on ASR-generated datasets for video retrieval and captioning, with 20x fewer clips and 100x fewer text sentences. In particular, the video-text database shows a large performance boost in the zero-shot setting. Additionally, the video-mining pipeline is able to mine some weakly matched audio-captioning data without any manual audio supervision at all, pretraining on which achieves state of the art results on text-audio retrieval benchmarks.

The annotation system can leverage cross-modal supervision to label video data. In some instances, the annotation system can use labeled data in one modality (e.g, images) to aid learning in another modality (e.g., videos, audios). Example techniques for cross-modal transfer can include, but not limited to, knowledge distillation, multimodal regularization, and mining new data and assigning labels based on a similarity value. Cross modal supervision can be particularly useful when there are large, labeled datasets in one modality (e.g., text-image retrieval), but are more challenging to obtain for a similar task in another modality (e.g., text-audio retrieval, text-video retrieval).

Examples of embodiments and implementations of the systems and methods of the present disclosure are discussed in the following sections.

### Technical Improvements

The techniques described herein, improve the performance of machine learning models, improve the training of machine learning models, and improve the accuracy, quality, and quantity of datasets for training machine learning models.

For example, by leveraging existing image datasets to mine video and audio data with captions, better video captioning datasets and audio captioning datasets are generated. The datasets can consist of millions of labeled video-text pairs and audio-text pairs. The mining pipeline is scalable and can be applied to any image captioning datasets. Training on the datasets also provides good performance for video and audio retrieval, as well as video captioning.

The captioning dataset includes technical improvements over conventional datasets (e.g., annotation based on ASR), such as improved diversity, improved alignment, better quality captions, and higher quantity of captions. For example, the video captioning dataset are more diverse and balanced because the videos are mined from a general corpus of videos online. For example, conventional datasets currently available are usually restricted to only instructional videos, such as cooking videos. Additionally, the video captioning dataset has better alignment because they are created by mining frames that have high visual similarity to the seed captioned image. Given that the seed image includes a relevant caption, it ensures that at least one frame in the mined video clip is aligned with the caption. This is a stricter constraint than ASR based datasets, which are problematic and known for occasional misalignment between speech and visual frames. Moreover, the video captioning datasets are high quality and can have multiple captions. The quality of the captions is transferred directly from the seed dataset. As a result, most of the captions of the video captioning dataset are fully formed, grammatically correct sentences, unlike the distribution of sentences obtained from ASR. Having multiple pairs from the same set of captions and video clips also helps ensure that learnt video and text representations are not overly specialized to individual samples, which can be a problem for existing datasets.

The techniques herein reduce memory storage by only storing short video clips that have an associated caption instead of a full-length video (e.g., movie). Additionally, the techniques reduce computer processing by training a machine learning model and using the machine learned model on video clips that have an associated caption instead of a full-length video. Furthermore, conventional systems for video annotation can be in general compute-heavy, which can have adverse environmental effects, such as high energy consumption of the computing resources. As a result, the techniques described herein can reduce energy consumption due to a reduction of computing resources required to train machine learning models and use the machine learned models. Moreover, by generating and publishing datasets that are an order of magnitude smaller than conventional datasets, while providing better zero-shot generalization, can lead to faster and cheaper language-video model innovation.

With regards to training time, the system can reduce the training time to train the machine learning model. In addition, reducing the training time allows the system to train larger models in production settings. The system can reduce the training time because the datasets can be more accurate and better quality. Additionally, the system can provide a significant decrease in runtime for deep convolutional or self-attention models, for example, by using better datasets. With regards to memory footprint, the system can also improve the memory footprint of model training, because the system is using more accurate and better-quality datasets.

### Example Devices and Systems

With reference now to the Figures, example embodiments of the present disclosure will be discussed in further detail.

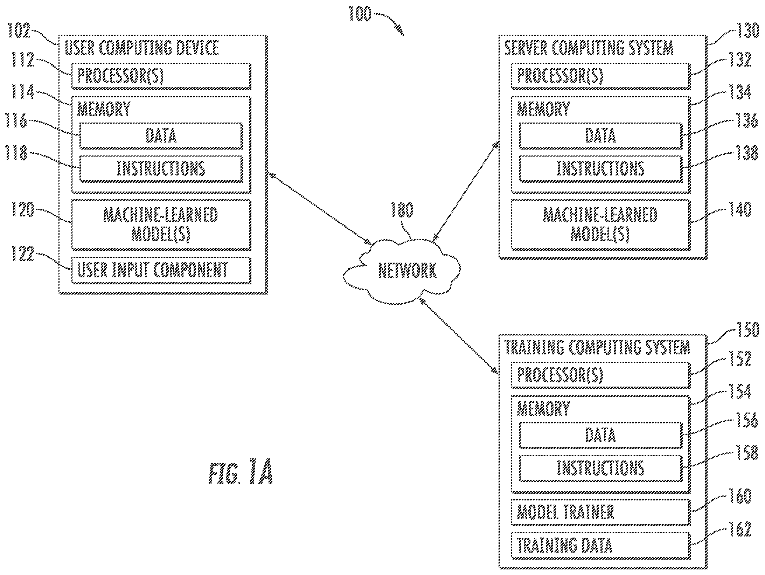

Figure 1A depicts a block diagram of an example computing system 100 that generates datasets and trains machine-learned models according to example embodiments of the present disclosure. The system 100 includes a user computing device 102, a server computing system 130, and a training computing system 150 that are communicatively coupled over a network 180.

The user computing device 102 can be any type of computing device, such as, for example, a personal computing device (e.g., laptop or desktop), a mobile computing device (e.g., smartphone or tablet), a gaming console or controller, a wearable computing device, an embedded computing device, or any other type of computing device.

The user computing device 102 includes one or more processors 112 and a memory 114. The one or more processors 112 can be any suitable processing device (e.g., a processor core, a microprocessor, an ASIC, a FPGA, a controller, a microcontroller, etc.) and can be one processor or a plurality of processors that are operatively connected. The memory 114 can include one or more non-transitory computer-readable storage mediums, such as RAM, ROM, EEPROM, EPROM, flash memory devices, magnetic disks, etc., and combinations thereof. The memory 114 can store data 116 and instructions 118 which are executed by the processor 112 to cause the user computing device 102 to perform operations.

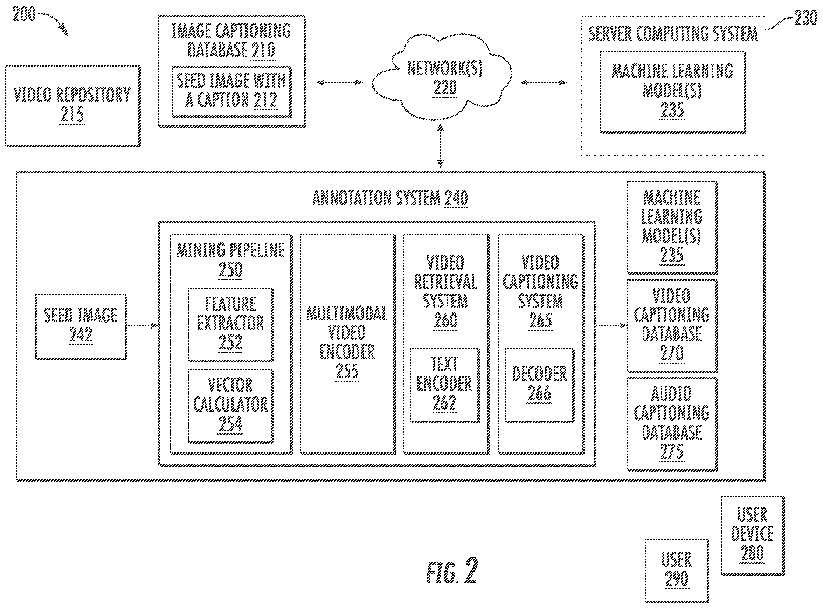

In some implementations, the user computing device 102 can store or include one or more models 120. For example, the models 120 (e.g., video captioning model, video retrieval model, audio captioning model, audio retrieval model) can be or can otherwise include various machine-learned models such as neural networks (e.g., deep neural networks) or other types of machine-learned models, including non-linear models and/or linear models. Neural networks can include feed-forward neural networks, recurrent neural networks (e.g., long short-term memory recurrent neural networks), convolutional neural networks or other forms of neural networks. In other examples, the models 120 can be specific video captioning, audio captioning, video retrieving, and audio retrieving models which are differentiable, and which have been parameterized to facilitate application of machine learning techniques. Example models 120 are discussed with reference to Figures 2-6.

In some implementations, the one or more models 120 can be received from the server computing system 130 over network 180, stored in the user computing device memory 114, and then used or otherwise implemented by the one or more processors 112. In some implementations, the user computing device 102 can implement multiple parallel instances of a single model 120.

More particularly, the models 120 can be trained using a training computing system 150 with a set of training data 162 (e.g., video captioning datasets, audio captioning datasets) to train the parameters of the model to optimize the model. The training computing system 150 may rely on the generated video captioning dataset to improve the performance of the models 120/140. Training data 162 may also include the creation of video captioning datasets and audio captioning datasets.

Additionally, or alternatively, one or more models 140 can be included in or otherwise stored and implemented by the server computing system 130 that communicates with the user computing device 102 according to a client-server relationship. For example, the models 140 can be implemented by the server computing system 134 as a portion of a web service (e.g., a video retrieval service, an audio retrieval service). Thus, one or more models 120 can be stored and implemented at the user computing device 102 and/or one or more models 140 can be stored and implemented at the server computing system 130.

The user computing device 102 can also include one or more user input component 122 that receives user input. For example, the user input component 122 can be a touch-sensitive component (e.g., a touch-sensitive display screen or a touch pad) that is sensitive to the touch of a user input object (e.g., a finger or a stylus). The touch-sensitive component can serve to implement a virtual keyboard. Other example user input components include a microphone, a traditional keyboard, or other means by which a user can provide user input.

The server computing system 130 includes one or more processors 132 and a memory 134. The one or more processors 132 can be any suitable processing device (e.g., a processor core, a microprocessor, an ASIC, a FPGA, a controller, a microcontroller, etc.) and can be one processor or a plurality of processors that are operatively connected. The memory 134 can include one or more non-transitory computer-readable storage mediums, such as RAM, ROM, EEPROM, EPROM, flash memory devices, magnetic disks, etc., and combinations thereof. The memory 134 can store data 136 and instructions 138 which are executed by the processor 132 to cause the server computing system 130 to perform operations.

In some implementations, the server computing system 130 includes or is otherwise implemented by one or more server computing devices. In instances in which the server computing system 130 includes plural server computing devices, such server computing devices can operate according to sequential computing architectures, parallel computing architectures, or some combination thereof.

As described above, the server computing system 130 can store or otherwise include one or more machine-learned models 140. For example, the models 140 can be or can otherwise include various machine-learned models. Example machine-learned models include neural networks or other multi-layer non-linear models. Example neural networks include feed forward neural networks, deep neural networks, recurrent neural networks, and convolutional neural networks. Example models 140 are discussed with reference to FIGS. 2-6.

The user computing device 102 and/or the server computing system 130 can train the models 120 and/or 140 via interaction with the training computing system 150 that is communicatively coupled over the network 180. The training computing system 150 can be separate from the server computing system 130 or can be a portion of the server computing system 130.

The training computing system 150 includes one or more processors 152 and a memory 154. The one or more processors 152 can be any suitable processing device (e.g., a processor core, a microprocessor, an ASIC, a FPGA, a controller, a microcontroller, etc.) and can be one processor or a plurality of processors that are operatively connected. The memory 154 can include one or more non-transitory computer-readable storage mediums, such as RAM, ROM, EEPROM, EPROM, flash memory devices, magnetic disks, etc., and combinations thereof. The memory 154 can store data 156 and instructions 158 which are executed by the processor 152 to cause the training computing system 150 to perform operations. In some implementations, the training computing system 150 includes or is otherwise implemented by one or more server computing devices.

The training computing system 150 can include a model trainer 160 that trains the machine-learned models 120 and/or 140 stored at the user computing device 102 and/or the server computing system 130 using various training or learning techniques, such as, for example, backwards propagation of errors. For example, a loss function can be back propagated through the model(s) to update one or more parameters of the model(s) (e.g., based on a gradient of the loss function). Various loss functions can be used such as mean squared error, likelihood loss, cross entropy loss, hinge loss, and/or various other loss functions. Gradient descent techniques can be used to iteratively update the parameters over a number of training iterations.

In some implementations, performing backwards propagation of errors can include performing truncated backpropagation through time. The model trainer 160 can perform a number of generalization techniques (e.g., weight decays, dropouts, etc.) to improve the generalization capability of the models being trained.

In particular, the model trainer 160 can train the machine-learned models 120 and/or 140 based on a set of training data 162. The training data 162 can include, for example, video captioning datasets, audio captioning datasets, image captioning datasets.

In some implementations, if the user has provided consent, the training examples can be provided by the user computing device 102. Thus, in such implementations, the model 120 provided to the user computing device 102 can be trained by the training computing system 150 on user-specific data received from the user computing device 102. In some instances, this process can be referred to as personalizing the model.

The model trainer 160 includes computer logic utilized to provide desired functionality. The model trainer 160 can be implemented in hardware, firmware, and/or software controlling a general-purpose processor. For example, in some implementations, the model trainer 160 includes program files stored on a storage device, loaded into a memory, and executed by one or more processors. In other implementations, the model trainer 160 includes one or more sets of computer-executable instructions that are stored in a tangible computer-readable storage medium such as RAM hard disk or optical or magnetic media.

The network 180 can be any type of communications network, such as a local area network (e.g., intranet), wide area network (e.g., Internet), or some combination thereof and can include any number of wired or wireless links. In general, communication over the network 180 can be carried via any type of wired and/or wireless connection, using a wide variety of communication protocols (e.g., TCP/IP, HTTP, SMTP, FTP), encodings or formats (e.g., HTML, XML), and/or protection schemes (e.g., VPN, secure HTTP, SSL).

Figure 1A illustrates one example computing system that can be used to implement the present disclosure. Other computing systems can be used as well. For example, in some implementations, the user computing device 102 can include the model trainer 160 and the training dataset 162. In such implementations, the models 120 can be both trained and used locally at the user computing device 102. In some of such implementations, the user computing device 102 can implement the model trainer 160 to personalize the models 120 based on user-specific data.

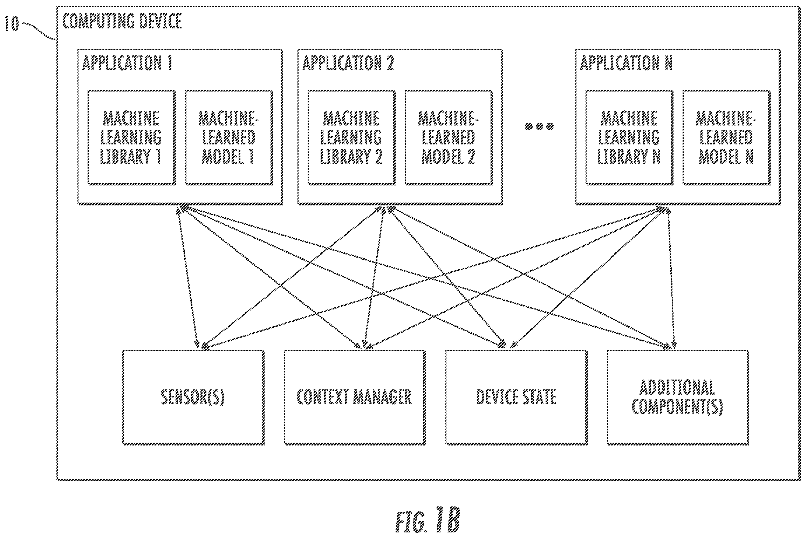

Figure 1B depicts a block diagram of an example computing device 10 that performs according to example embodiments of the present disclosure. The computing device 10 can be a user computing device and/or a server computing device.

The computing device 10 includes a number of applications (e.g., applications 1 through N). Each application contains its own machine learning library and machine-learned model(s). For example, each application can include a machine-learned model. Example applications include a text messaging application, an email application, a dictation application, a virtual keyboard application, a browser application, etc.

As illustrated in Figure 1B, each application can communicate with a number of other components of the computing device, such as, for example, one or more sensors, a context manager, a device state component, and/or additional components. In some implementations, each application can communicate with each device component using an API (e.g., a public API). In some implementations, the API used by each application is specific to that application.

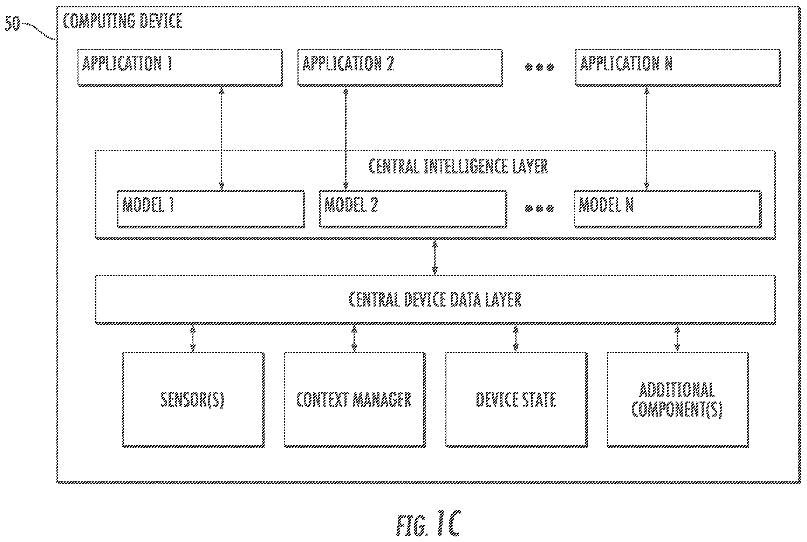

Figure 1C depicts a block diagram of an example computing device 50 that performs according to example embodiments of the present disclosure. The computing device 50 can be a user computing device and/or a server computing device.

The computing device 50 includes a number of applications (e.g., applications 1 through N). Each application is in communication with a central intelligence layer. Example applications include a text messaging application, an email application, a dictation application, a virtual keyboard application, a browser application, etc. In some implementations, each application can communicate with the central intelligence layer (and model(s) stored therein) using an API (e.g., a common API across all applications).

The central intelligence layer includes a number of machine-learned models. For example, as illustrated in Figure 1C, a respective machine-learned model (e.g., a model) can be provided for each application and managed by the central intelligence layer. In other implementations, two or more applications can share a single machine-learned model. For example, in some implementations, the central intelligence layer can provide a single model (e.g., a single model) for all of the applications. In some implementations, the central intelligence layer is included within or otherwise implemented by an operating system of the computing device 50.

The central intelligence layer can communicate with a central device data layer. The central device data layer can be a centralized repository of data for the computing device 50. As illustrated in Figure 1C, the central device data layer can communicate with a number of other components of the computing device, such as, for example, one or more sensors, a context manager, a device state component, and/or additional components. In some implementations, the central device data layer can communicate with each device component using an API (e.g., a private API).

The machine-learned models described in this specification may be used in a variety of tasks, applications, and/or use cases.

In some implementations, the input to the machine-learned model(s) of the present disclosure can be a video captioning model, an audio captioning model, a video retrieval model, and/or an audio retrieval model. The machine-learned model(s) can process the data to generate an output. As an example, the machine-learned model(s) can process the data to generate a video clip, video data, or an audio file, an encoded representation of the video data, a hash of the video data, and so on. As another example, the machine-learned model(s) can process the data to generate a video classification output. As another example, the machine-learned model(s) can process the data to generate a video data modification output (e.g., an alteration of the video data, etc.). As another example, the machine-learned model(s) can process the data to generate an encoded video data output (e.g., an encoded and/or compressed representation of the video data, etc.). As another example, the machine-learned model(s) can process the data to generate a prediction output.

In some implementations, the input to the machine-learned model(s) of the present disclosure can be text or natural language data. The machine-learned model(s) can process the text or natural language data to generate an output. As an example, the machine-learned model(s) can process the natural language data to generate video data or audio data.

In some implementations, the input to the machine-learned model(s) of the present disclosure can be speech data. The machine-learned model(s) can process the speech data to generate an output. As an example, the machine-learned model(s) can process the speech data to generate a speech recognition output. As another example, the machine-learned model(s) can process the speech data to generate video data or audio data.

In some cases, the machine-learned model(s) can be configured to perform a task that includes encoding input data for reliable and/or efficient transmission or storage (and/or corresponding decoding). For example, the task may be an audio or video compression task. The input may include audio data and the output may comprise compressed audio or video data. In another example, the input includes visual data (e.g., one or more images, audio files, or videos), the output comprises compressed visual data, and the task is a visual data compression task. In another example, the task may comprise generating an embedding for input data (e.g., input audio or visual data).

In some cases, the input includes visual data, and the task is a computer vision task. In some cases, the input includes pixel data for one or more images and the task is an image processing task. For example, the image processing task can be image classification, where the output is a set of scores, each score corresponding to a different object class and representing the likelihood that the one or more images depict an object belonging to the object class. The image processing task may be object detection, where the image processing output identifies one or more regions in the one or more images and, for each region, a likelihood that region depicts an object of interest. As another example, the image processing task can be image segmentation, where the image processing output defines, for each pixel in the one or more images, a respective likelihood for each category in a predetermined set of categories. For example, the set of categories can be foreground and background. As another example, the set of categories can be object classes. As another example, the image processing task can be depth estimation, where the image processing output defines, for each pixel in the one or more images, a respective depth value. As another example, the image processing task can be motion estimation, where the network input includes multiple images, and the image processing output defines, for each pixel of one of the input images, a motion of the scene depicted at the pixel between the images in the network input.

In some cases, the input includes audio data representing a spoken utterance and the task is a speech recognition task. The output may comprise a text, audio, video output which is mapped to the spoken utterance. In some cases, the task comprises encrypting or decrypting input data. In some cases, the task comprises a microprocessor performance task, such as branch prediction or memory address translation.

Figure 2 depicts an example environment 200 for labeling video clips to generate a dataset and training machine-learned models using the generated dataset, according to example embodiments of the present disclosure. The annotation system 240 training one or more machine learning models 235 using training data that include video clips stored in a video captioning database 270 and audio clips stored in an audio captioning database 275. The one or more machine learning models 235 can include the machine-learned models 120, 140 in FIG. 1A. The one or more machine learning models 235 can be maintained (e.g., stored) in the server computing system 230 or the annotation system 240. The server computing system 230 can be similar to the server computing system 130 in FIG. 1A. The machine learning models 235 can be, for instance, a classifier model, a linear regression model, logistic regression model, a support vector machine model, a neural network (e.g., convolutional neural network, recurrent neural network, etc.), or another suitable model. The annotation system 240, the server computing system 230, the image captioning database 210, and the video repository 215 can communicate with each other via network(s) 220. The network(s) 220 can be similar to the network 180 in FIG. 1A.

### Automatic Mining Pipeline for Obtaining Video clips paired with Captions

According to some embodiments, the annotation system 240 can include an automatic mining pipeline 250 for obtaining and generating video clips paired with captions data. The annotation system 240 can then train text-video and text-audio models using the video clips paired with caption data.

In some instances, the mining pipeline 250 can include obtaining a seed image 242 (or one or more seed images 242) from an image captioning database 210, which includes one or more seed images 212. For each image-caption pair in a dataset, the annotation system 240 can extract (e.g., find, discover) frames in videos similar to the image. The annotation system 240 can then extract short video clips around the matching frames and transfer the caption to the extracted video clips.

The annotation system 240 can identify seed images from the image captioning database 210. The process can be initiated by the mining pipeline 250 selecting one or more seed images 212 with a caption from the image captioning database 210. The images in obtained from the image captioning database 210 can be referred to as seed images (*x_{seed}*) 242.

The annotation system 240 can extract features from the obtained seed images 242. For example, the annotation system 240 can calculate a visual feature vector *f*(*x_{seed}*) for each seed image using a visual feature vector calculator 254. Given that the annotation system 240 is trying to mine semantically similar images, the annotation system 240 can extract features, using a feature extractor 252. The feature extractor 252 can use a deep machine-learned model trained for image retrieval. Subsequently, the annotation system 240 then extract the same visual features *f*(*xᵥ*) for the frames *xᵥ* of a plurality of videos that are stored in a video repository 215. For example, the video repository 215 can include videos that are publically available and published online. Additionally, because visual information in videos can be strongly correlated over time, the annotation system can extract features at a reduced rate (e.g., 1 fps) relative to the original video frame rate for efficiency. For example, the video can have a video frame rate of 24 frames-per-second (fps), and the plurality of frames extracted from the video can be 1 fps. By extracting frames and features at a reduced frame rate, the annotation system 240 reduces the memory storage for storing the video frames and also improves the processing of the training by requiring fewer computing resources and reducing processing time.

The annotation system 240 can determine whether each of the one or more obtained seed images 242 is similar to a frame of a video. For example, a similarity function, value or score (also known as a similarity measure or similarity metric) can be used to quantify the similarity between, without limitation, for example two objects, entities, items, and/or feature vectors and the like. For example, the similarity function, score and/or value may be used determine a real-valued function, score and/or value representing the similarity between the feature vectors for each seed image in the caption dataset and the feature vectors for each video frame obtained from the plurality of videos. For example, a similarity value between feature vectors can be calculated by, for example, determining an L2-distance between the feature vector of the first frame and the feature vector of the first image; using an artificial neural network trained on image classification that outputs a real-valued classification, score or value; using a dot product similarity technique; using the Euclidean distance between vectors and the like; and/or based on any other type of distance metric or metric useful for measuring the similarity between without limitation, for example the feature vector of the first frame and the feature vector of the first image and the like.

In some instances, the vector calculator 254 can calculate the dot product similarity between the feature vectors for each seed image in the caption dataset and the feature vectors for each video frame obtained from the plurality of videos. For example, a seed image can be paired with a video frame when the calculated similarity value above or reaches a threshold value *τ*.

For retrieval purposes, the annotation system 240 can store the video clips with the highest similarity scores for each seed image in a video captioning database 270. For example, the annotation system 240 can store a certain number of video clips (e.g., top 10 matches). Additionally, the annotation system 240 can transfer the caption from the image to a short video clip extracted at a temporal span *t* around the matched image frame and add it to the video captioning database 270. The determination of the temporal *t* and the threshold value *τ* are further described below. Similarly, the annotation system can store audio files (e.g., audio clips) that have been labeled using the techniques described herein in an audio captioning database 275.

The annotation system 240 can determine an optimal value for time span t based on obtained video data. For example, the annotation system 240 can extract different length clip segments t between different time segments in seconds (e.g., 5 and 30 seconds), and determine the optimal value for time span t (e.g., 10 seconds).

According to some embodiments, the mining pipeline 250 can extract fixed length clips of a short duration. According to other embodiments, the mining pipeline 250 can use image and video models to intelligently determine the boundaries of the mined clips, which can also be used for localization. The mining pipeline 250 can also be applied to other seed image captioning datasets (not pictured in FIG. 2).

Additionally, the annotation system 240 can determine an optimal value for threshold value *τ*. For example, the annotation system 240 can experiment with different match threshold values *τ* for the similarity in a certain range (e.g., range {0.5,0.6,0.7,0.8.0.9}) and determine the effect of the range on the mining statistics. In some instances, the higher the match threshold, the stricter the similarity requirement on the matched frames to the caption. Depending on the dataset, the performance in increased up to a certain threshold value (e.g., when threshold value *τ* = 0.6) without reduction in dataset size. However, as the threshold value *τ* increase above the optimal value, the number of matches can be reduced, which results in fewer videos and clips in the dataset, and a corresponding drop in downstream performance.

The techniques described herein provide benefits of automated annotations using transferred captions. The annotation system 240 can provide captioning supervision for modalities that are difficult to annotate. In some instances, by existing sources of image supervision, the annotation system can automatically mine related frames. For example, the existing source of image supervision can include the seed image captioning dataset and the image similarity model *f*(·). The techniques described herein can provide valuable supervision for new clips with motion, as well as free supervision for the audio stream. The labeled audio samples, which can be stored in the audio captioning database 275, can be used for pretraining text-audio models.

### Text-Video Models of an Annotation System

According to some embodiments, the annotation system 240 can implement different text-video models using the generated video captioning and audio captioning datasets, for video retrieval and captioning, respectively. For retrieval, a dual-stream approach (e.g., one stream being an audio-video encoder and one stream being a text encoder for the caption) to train the model can be utilized, which when trained with a contrastive loss allows for efficient text-video retrieval. The efficient dual stream approach can utilize a video encoder that is multimodal, which incorporates audio as well. For video captioning, an encoder-decoder style generative model can be used. The multimodal video encoder 255 can be utilized for both video retrieval and video captioning. The video retrieval system 260 describes the text encoder and contrastive loss function used for retrieval. The video captioning system 265 below describes the text decoder and loss function used for captioning.

The multimodal video encoder 255 can be an audio-visual transformer-based model and can be applied to both text-video and text-audio retrieval. For example, RGB frames can be extracted at a fixed sampling rate from each video, and log-mel spectrograms can be used to represent audio. The multimodal video encoder 255 can then extract N non-overlapping patches from the RGB image or the audio spectrogram. The model can consist of a number of transformer layers for each modality, with separate weights for each modality and fusion done via bottleneck tokens. In some instances, the multimodal video encoder 255 can use the RGB-only, audio-only and RGB-audio fusion versions depending on the input modalities.

### Video Retrieval System

The video retrieval system 260 can include a text encoder 262. For example, the architecture of the text encoder 262 can be a language representation model, such as a Bidirectional Encoder Representations from Transformers (BERT) model. For the final text encoding, the text encoder 262 can use a special classification token (e.g., CLS) output of the final layer.

Additionally, the video retrieval system 260 can include joint embedding. For the final video encoding, the video retrieval system 260 can average the tokens (e.g., CLS) from both audio and RGB modalities. For example, both text and video encodings can then be projected to a common dimension (e.g., *D* = 256) via a single linear layer each. Subsequently, the video retrieval system 260 can compute the dot product similarity between the two projected embeddings after normalization.

Moreover, the video retrieval system 260 can use a loss function to optimize and train the machine-learning model. For example, the video retrieval system can use a noise-contrastive estimation (NCE), which is a type of contrastive loss function used for self-supervised learning. The NCE loss can be used to learn a video and text embedding space, where matching text-video pairs in the batch can be treated as positives, and all other pairwise combinations in the batch can be treated as negatives. The video retrieval system 260 can minimize the sum of two losses, video-to-text and text-to-video to optimize and train the machine-learning model.

### Video Captioning System

The video captioning system 265 can include a decoder 266 to generate a text caption. In some instances, the decoder 266 can be a standard autoregressive decoder. Additionally, the video captioning system 265 can condition each predicted text token on video features from the multimodal video encoder 255 as well as previously generated text tokens. For example, given video features *C* as context, to generate the next token *yᵢ* in our caption *Y*, the video captioning system 265 can first encode the previous generated tokens *Yᵢ =* {*y*₀*,* ... , *y*_{*i*-1}} with a look-up table and a positional embedding to produce *Hᵢ =* {*h*₀*, ... , h*_{*i-*1}}*.* The video captioning system 265 can encode the context *C* and the previous embedded tokens *Hᵢ* using a single transformer. The outputs of this transformer are *C̃* ∪ *H̃ᵢ*, where *H̃ᵢ =* {*h̃*₀*,* ..., *h̃*_{*i-*1}}. Subsequently, the video captioning system 265 can predict the next token *yᵢ* from *h̃*_{*i-*1} using a linear projection with a softmax: *yᵢ = argmax*(*softmax*(*Φh̃*_{*i-*1})) where *Φ* ∈ *R*^{*v*×*d*} is the linear projection matrix and *v* is the vocabulary size. In some instances, the first word *h*₀ can be set using a special BOS (beginning of sentence) token, and tokens are generated until a special EOS (end of sentence) token is generated.

Additionally, the video captioning system 265 can use a loss function to optimize and train the machine-learning model. For example, the video captioning system 265 can minimize the negative log-likelihood of generating the ground-truth caption of the loss function to optimize the machine-learning model.

In general, the annotation system 240 or the server computing system 230 can compute updates to the trainable parameters of the machine-learning models 235 based on the video captioning database 270 and the audio captioning database 275 periodically or continually. In some implementations, the learning of trainable parameters includes an online or continuous machine-learning algorithm. For instance, some implementations may continuously update trainable parameters within the machine learning models without cycling through training the entire model.

According to some embodiments, the annotation system 240 can label a first frame of a video with an associated caption (e.g., a labeled caption) that is similar or the same as the associated caption of the seed image 242 based on a similarity value. Additionally, the annotation system 240 can generate a video clip of the first video based on the first frame. The video clip can be in the video captioning database 270. The video clip can also be associated with the labeled caption. Subsequently, the annotation system 240 can receive a user input (e.g., request) from a user device 280 of a user 290. The user input can indicate a video request associated with the labeled caption. In response to the user input, the annotation system can present the video clip on a user interface of the user device 280.

FIG. 3A depicts a diagram 300 of an example of automatically mining audio-video clips and labeling the clips with a caption, according to example embodiments of the present disclosure. The annotation system can obtain a captioned image 305 from an image captioning dataset 310 and use it as a seed image (e.g., seed frame) to mine related audio-visual clips 315. For each seed image-caption pair in a dataset, the annotation system can determine a similarity score 320 to the seed image. The annotation system can select a first frame 325 from a first video and a second frame 330 from a second video that have a similarity score above a match threshold value 335. Subsequently, the annotation system can extract short video clips around the matching frames and transfer the caption 340 from the seed image to those clips. The video clips that have now been labeled with the caption 340 can be stored in a video captioning database. FIG. 3A is an example of a free captioning supervision for video and audio clips.

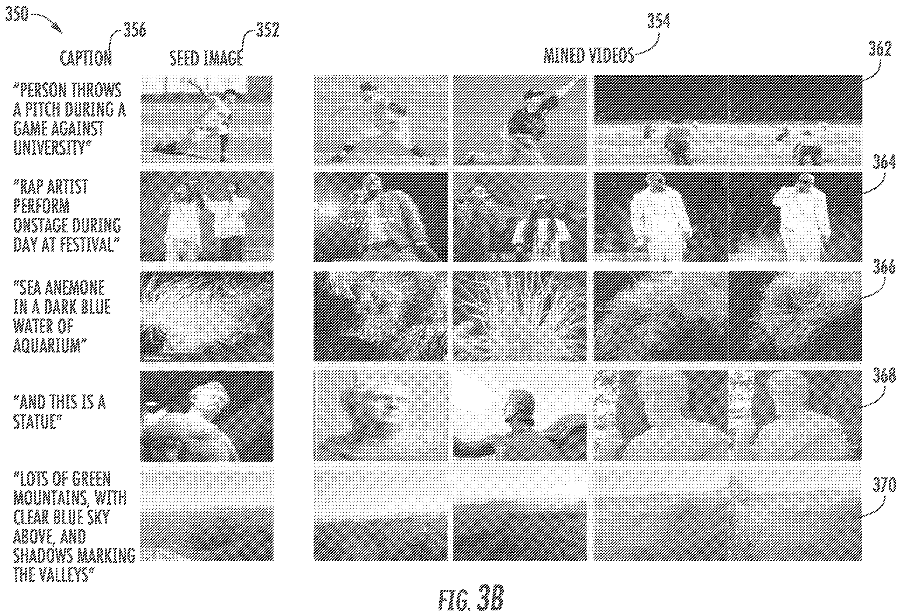

FIG. 3B depicts a diagram 350 of another example of mining audio-video clips and labeling the clips with a caption, according to example embodiments of the present disclosure. The annotation system can mine a plurality of different video clips 354 for each seed image 352 and label each video clip in the plurality of the different video clips with a caption 356 that is associated with each frame. As illustrated in this example, for each seed image, the annotation system has selected three matched video clips using the automatic video mining techniques described herein. For illustrative purposes, the first two video clips are a single frame, and the third video clip includes a first and second frame to illustrate motion, either of the subjects in the video (i.e., video clips 362, 364, 366 in first three rows) or small camera motion (i.e., video clips 368, 370 last two rows). Additionally, as highlighted in FIG. 3B, the annotation system can mine a diverse set of video clips, for example, the different pitching poses and angles (i.e., video clip 362 in the first row) and the different types of statues (i.e., video clip 368 in the fourth row). Moreover, the video clips in the second row also contain audio relevant to the caption. Furthermore, the annotation system can crop and resize the frames, using machine-learning techniques, for ease of visualization.

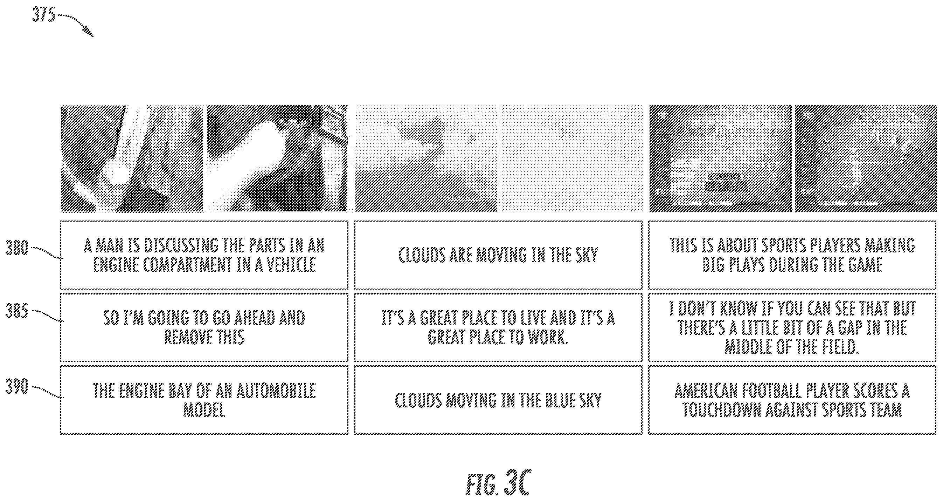

FIG. 3C depicts a diagram 375 of example results of captioning video clips using the annotation system, according to example embodiments of the present disclosure. In some instances, the results of the labeling of the video clips by the annotation system is tested for accuracy and quality. As illustrated in FIG. 3C, the zero-shot captioning results on a set of test videos using the annotation system labeling 390 from the annotation system are closer to the ground truth 380 in comparison to the conventional labeling 385 from a conventional system. The diagram 375 illustrates two frames per video clip that are obtained from a video. As illustrated, the style of the predicted captions from a model pre-trained by the annotation system are closer to the ground truth than using a model pre-trained using a conventional method (i.e., ASR).

### Example Methods

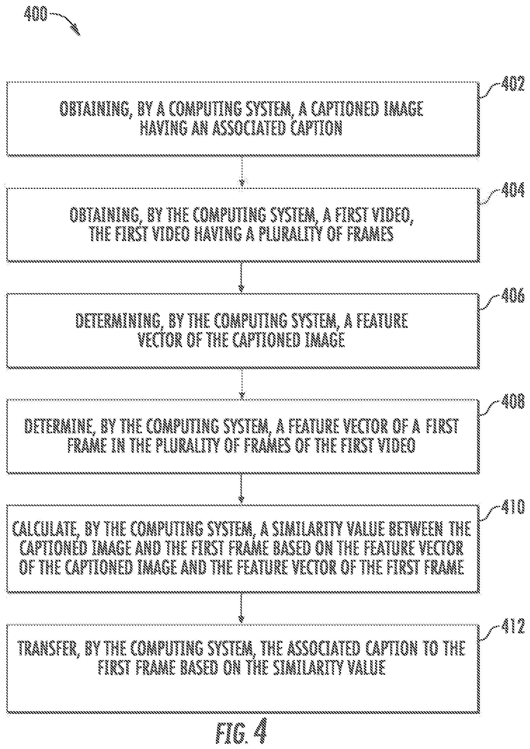

FIG. 4 depicts a flow diagram of an example method 400 for labelling or annotating audio samples/videos for a training data set for use in training a machine-learning model by the annotation system, according to example embodiments of the present disclosure. Method 400 can be implemented by one or more computing devices, such as one or more of the computing devices (e.g., annotation system 240, server computing system 130, computing device 10, and/or computing device 50) depicted in Figures 1A-1C and/or 2. In addition, FIG. 4 depicts steps performed in a particular order for purposes of illustration and discussion. Each respective portion of the method 400 can be performed by any (or any combination) of one or more computing devices. Those of ordinary skill in the art, using the disclosures provided herein, will understand that the steps of any of the methods discussed herein can be adapted, rearranged, expanded, omitted, or modified in various ways without deviating from the scope of the present disclosure.

FIG. 4 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. FIG. 4 is described with reference to elements/terms described with respect to other systems and figures for exemplary illustrated purposes and is not meant to be limiting. One or more portions of method 400 can be performed additionally, or alternatively, by other systems.

At 402, the annotation system 240 can obtain a captioned image with an associated caption. The captioned image can be obtained from the image captioning database 210. Additionally, the annotation system 240 can obtain a plurality of images, where each image in the plurality of images has an associated caption. The captioned image can be the seed image 242 in FIG. 2.

In some instances, a label can be type of caption. For example, the caption can be a textual label describing a captioned image. Additionally, the caption can be data types other than text, such as but not limited to audio, web link, reference number, and so on.

At 404, the annotation system 240 can obtain a first video. The first video can have a plurality of frames. The first video can be obtained from the video repository 215. Additionally, the annotation system 240 can obtain a plurality of videos from the video repository 215 to try to match with the captioned image obtained at 402. In some instances, the original video stored in the video repository can have a first video frame rate (e.g., 24 fps), but the first video obtained by the annotation system 240 at 404 can have a lower video frame rate (e.g., 1 fps). As a result, the plurality of frames of the first video will be less than the plurality of frames of the original video. By having less frames to process at method 400, the techniques described herein allow for faster computing time, utilization of less processing resources, and utilization of less memory than conventional systems.

At 406, the annotation system 240 can determine a feature vector of the captioned image. For example, the features of the captioned image can be extracted by the feature extractor 252 using techniques described in FIG. 2. For example, the feature vector determined at 406 can be calculated by the vector calculator 254 or the mining pipeline 250 using techniques described in FIG. 2.

At 408, the annotation system 240 can determine a feature vector of a first frame in the plurality of frames of the first video. For example, the features of the first frame can be extracted by the feature extractor 252 using techniques described in FIG. 2. For example, the feature vector determined at 408 can be calculated by the vector calculator 254 or the mining pipeline 250 using techniques described in FIG. 2.

At 410, the annotation system 240 can calculate a similarity value between the captioned image and the first frame based on the feature vector of the captioned image and the feature vector of the first frame. For example, the similarity value can be calculated using the techniques described in FIG. 2.

In some instances, the similarity value can be calculated by determining an L2-distance between the feature vector of the first frame and the feature vector of the captioned image.

In some instances, the similarity value can be calculated using an artificial neural network trained on image classification.

In some instances, the similarity value can be calculated using a dot product similarity technique.

At 412, the annotation system 240 can label the first frame with an associated caption that is similar to the associated caption of the captioned image based on the similarity value. For example, the annotation system 240 can transfer the associated caption to the first frame based on the similarity value. Additionally, the associated caption can be transferred to the first frame after a determination has been made that the similarity value transgresses (e.g., exceeds) a match threshold value.

In some instances, the associated caption can be directly transferred to the first frame when the similarity value transgresses the match threshold value. In other instances, a related caption to the associated caption can be transferred to the first frame. For example, a related caption can be word that is related to, but not the same as, the associated caption, such as a synonym.

In some instances, only some associated labels can be directly transferred to the first frame, while other associated labels are not transferred. The determination to transfer the associated label to the first frame can be based on the similarity value and a match threshold value.

In some instances, the annotation system 240 can label a plurality of frames of the first video with a labeled caption that is similar to the associated caption of the captioned image based on the similarity value. In some instances, the annotation system 240 can label a plurality of frames of a plurality of videos with labeled captions that is similar to the associated captions of a plurality of images based on similarity values between a frame of a video and an image.

In some instances, the annotation system 240 can access a lookup table based on the associated caption. The lookup table can have a plurality of captions that are related to the associated caption. Additionally, the annotation system 240 can label, using the lookup table, the first frame with a new caption from the plurality of captions.

In some instances, the annotation system 240 can index a feature vector of a similar video frame. Additionally, the annotation system 240 can index a feature vector computed from multiple frames that are nearby to each other. The lookup table can be based on the index feature vectors. By indexing the feature vectors, the processing time of retrieving (e.g., finding, matching, accessing) video frames that are similar to the captioned image can be reduced.

In some instances, method 400 can further include the annotation system 240 to determine that a third frame of the first video does not have a caption. Additionally, based on the determination, the annotation system 240 can generate a new video based on the first video, where the third frame is deleted from the first video to generate the new video. By deleting one or more frames from the first video, the annotation system can automatically reduce the memory storage requirement for the system.

In some instances, method 400 can further include the annotation system 240 generating an audio file of the first video based on the first frame. The audio file can be associated with the labeled caption. Additionally, the annotation system 240 can receive a user input, from a user device. The user input can indicate an audio request associated with the labeled caption. Moreover, the annotation system 240 can output, on a speaker of the user device, the audio file in response to receiving the user input. The audio file can be generated based on the associated caption of the captioned image. For example, the audio file can be an audio description of the image based on the associated caption.

In some instances, method 400 can further include the annotation system 240 obtaining a set of images from an image captioning dataset. The set of images can have the captioned image that is obtained at 402. Additionally, the annotation system 240 can obtain a set of videos from a video repository (e.g., a public domain, private domain, third-party video database). The set of videos can have the first video that is obtained at 404. Moreover, the annotation system 240 can select a second video from the set of videos. The annotation system 240 can extract a feature vector of a new frame of the second video. The annotation system 240 can calculate a new similarity value between the captioned image and the new frame based on the feature vector of the captioned image and the feature vector of the new frame. Subsequently, the annotation system 240 can label the new frame with a labeled caption that is similar to the associated caption of the captioned image based on the new similarity value.

Any number of iterations of video and audio labeling can be performed. That is, method 400 can be performed iteratively for each seed image in the image captioning database. In some instances, the annotation system can select a plurality of video clips (e.g., top 10 matched video clip) for each seed image to label with the associated caption and store in the video captioning database 270.

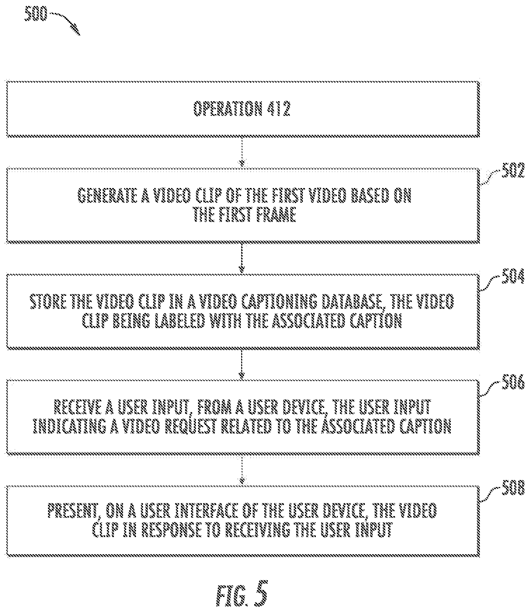

FIG. 5 depicts a flowchart of a method 500 to perform a video retrieval using an annotation system, according to example embodiments of the present disclosure. One or more portion(s) of the method 500 can be implemented by a computing system that includes one or more computing devices such as, for example, the computing systems described with reference to the other figures (e.g., annotation system 240, server computing system 130, computing device 10, computing device 50). Each respective portion of the method 500 can be performed by any (or any combination) of one or more computing devices. Moreover, one or more portion(s) of the method 500 can be implemented as an algorithm on the hardware components of the device(s) described herein (e.g., FIGS. 1A-C, 2), for example, to train a machine-learning model (e.g., machine-learned model(s) 235).

FIG. 5 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. FIG. 5 is described with reference to elements/terms described with respect to other systems and figures for exemplary illustrated purposes and is not meant to be limiting. One or more portions of method 500 can be performed additionally, or alternatively, by other systems.

According to some embodiments, method 500 can be performed after the annotation system 240 has labeled the first frame with an associated caption at operation 412. According to some other embodiments, method 500 can be performed as a standalone process (e.g., without operation 412).

At 502, the annotation system 240 can generate a video clip of the first video based on the first frame. As previously mentioned, the first frame has been labeled with a caption at 412.

At 504, the annotation system 240 can store the video clip in a video captioning database (e.g., video captioning database 275). The video clip can be associated with the labeled caption.

In some instances, the annotation system 240 can determine a match threshold value based on a number of video clips stored in the video captioning dataset (e.g., video captioning database 270) that are associated with the labeled caption. For example, the match threshold value can be reduced if the number of video clips is below average for the dataset or below an amount threshold. Alternatively, the match threshold value can be increased if the number of video clips is above average for the dataset or above an amount threshold. Furthermore, the first frame is labeled at 412 with the associated caption when the similarity value exceeds the match threshold value. FIG. 3A describes an example of the labeling techniques using the similarity threshold value.

At 506, the annotation system 240 can receive a user input, from a user device (e.g., user device 280). The user input indicates a video request of the associated caption.

At 508, the annotation system 240 can present, on a user interface of the user device, the video clip in response to receiving the user input.

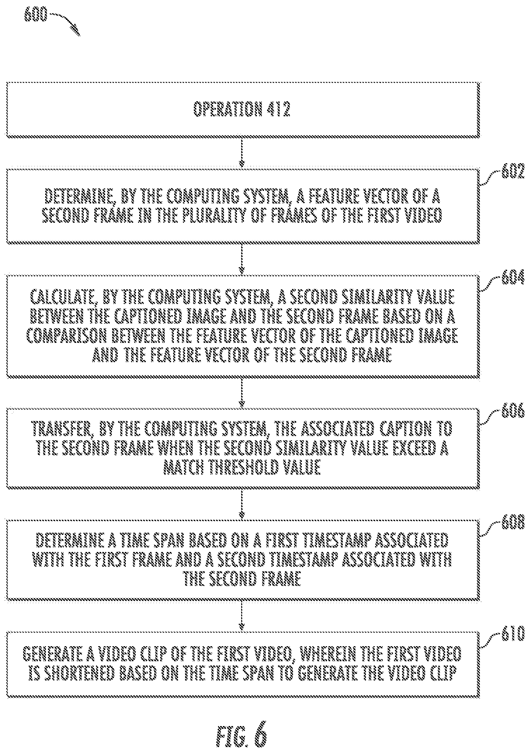

Figure 6 depicts a flow chart diagram of an example method 600 to generate a video clip, according to example embodiments of the present disclosure. One or more portion(s) of the method 600 can be implemented by a computing system that includes one or more computing devices such as, for example, the computing systems described with reference to the other figures (e.g., server computing system 130, computing device 10, computing device 50, annotation server 240). Each respective portion of the method 600 can be performed by any (or any combination) of one or more computing devices. Moreover, one or more portion(s) of the method 600 can be implemented as an algorithm on the hardware components of the device(s) described herein (e.g., FIGS. 1A-C, 2), for example, to train a machine-learning model (e.g., machine-learned model(s) 235).

FIG. 6 depicts elements performed in a particular order for purposes of illustration and discussion. Those of ordinary skill in the art, using the disclosures provided herein, will understand that the elements of any of the methods discussed herein can be adapted, rearranged, expanded, omitted, combined, or modified in various ways without deviating from the scope of the present disclosure. FIG. 6 is described with reference to elements/terms described with respect to other systems and figures for exemplary illustrated purposes and is not meant to be limiting. One or more portions of method 600 can be performed additionally, or alternatively, by other systems.

At 602, the annotation system 240 can determine a feature vector of a second frame in the plurality of frames of the first video.

In some instances, the feature vector of the second frame can further be determined based on the feature vector of the first frame. In some instances, the temporal information of the video between the first frame and the second frame can assist in determining the feature vector. For example, two frames that are close in time to each other may have a similar image.

At 604, the annotation system 240 can calculate a second similarity value between the captioned image and the second frame based on a comparison between the feature vector of the captioned image and the feature vector of the second frame.

At 606, the annotation system 240 can label the second frame with the labeled caption when the second similarity value exceeds a match threshold value.

In some instances, the first frame can include a first timestamp, and the second frame can include a second timestamp.

At 608, the annotation system 240 can determine a time span based on the first timestamp and the second timestamp.

At 610, the annotation system 240 can generate a video clip of the first video. The first video can be shortened based on the time span to generate the video clip. Additionally, the annotation system can label the video clip with the labeled caption.

In some instances, the plurality of frames of the first video are generated based on a first video frame rate. Additionally, the annotation system 240 can select the second frame based on a reduced video frame rate. The reduced video frame rate being less than the first video frame rate. For example, the video frame rate of the first video can be the frame rate of how the video was captured (e.g., 24 fps) and the reduced video frame rate can be a lower video frame (e.g., 1 fps) in order to improve the performance of the annotation system.

### Additional Disclosure

The technology discussed herein makes reference to servers, databases, software applications, and other computer-based systems, as well as actions taken, and information sent to and from such systems. The inherent flexibility of computer-based systems allows for a great variety of possible configurations, combinations, and divisions of tasks and functionality between and among components. For instance, processes discussed herein can be implemented using a single device or component or multiple devices or components working in combination. Databases and applications can be implemented on a single system or distributed across multiple systems. Distributed components can operate sequentially or in parallel.

While the present subject matter has been described in detail with respect to specific example embodiments and methods thereof, it will be appreciated that those skilled in the art, upon attaining an understanding of the foregoing can readily produce alterations to, variations of, and equivalents to such embodiments. Accordingly, the scope of the present disclosure is by way of example rather than by way of limitation, and the subject disclosure does not preclude inclusion of such modifications, variations or additions to the present subject matter as would be readily apparent to one of ordinary skill in the art.

The use of computer-based systems allows for a great variety of possible configurations, combinations, and divisions of tasks and functionality between and among components. Computer-implemented operations can be performed on a single component or across multiple components. Computer-implemented tasks and/or operations can be performed sequentially or in parallel. Data and instructions can be stored in a single memory device or across multiple memory devices.

Aspects of the disclosure have been described in terms of illustrative embodiments thereof. Numerous other embodiments, modifications, and/or variations within the scope and spirit of the appended claims can occur to persons of ordinary skill in the art from a review of this disclosure. Any and all features in the following claims can be combined and/or rearranged in any way possible. Accordingly, the scope of the present disclosure is by way of example rather than by way of limitation, and the subject disclosure does not preclude inclusion of such modifications, variations or additions to the present subject matter as would be readily apparent to one of ordinary skill in the art. Moreover, terms are described herein using lists of example elements joined by conjunctions such as "and," "or," "but," etc. It should be understood that such conjunctions are provided for explanatory purposes only. Lists joined by a particular conjunction such as "or," for example, can refer to "at least one of" or "any combination of" example elements listed therein. Also, terms such as "based on" should be understood as "based at least in part on."

Those of ordinary skill in the art, using the disclosures provided herein, will understand that the elements of any of the claims discussed herein can be adapted, rearranged, expanded, omitted, combined, or modified in various ways without deviating from the scope of the present disclosure. Some of the claims are described with a letter reference to a claim element for exemplary illustrated purposes and is not meant to be limiting.

## Claims

1. A computer-implemented method for improving a retrieval system, the method comprising:
obtaining (402), by a computing system (10, 50, 240), a captioned image, the captioned image having an image and an associated caption;
obtaining (404), by the computing system (10, 50, 240), a first video from a set of videos, the first video having a plurality of frames, wherein each video in the set of videos have an index score for the associated caption, said obtaining further comprising:
obtaining, by the computing system (10, 50, 240), a set of images from an image captioning dataset, the set of images having the captioned image; and
selecting the first video from the set of videos based on index score of the first video for the associated caption;
determining (406), by the computing system (10, 50, 240), a feature vector of the captioned image;
determining (408), by the computing system (10, 50, 240), a feature vector of a first frame in the plurality of frames of the first video;
calculating (410), by the computing system (10, 50, 240), a similarity value between the captioned image and the first frame based on the feature vector of the captioned image and the feature vector of the first frame; and
transferring (412), by the computing system (10, 50, 240), the associated caption to the first frame based on the similarity value.

2. The method of claim 1, further comprising:
generating a video clip of the first video based on the first frame;
storing the video clip in a video captioning database; and
transferring the associated caption to the video clip based on the similarity value and a match threshold value.

3. The method of claim 2, further comprising:
receiving a user input, from a user device, the user input indicating a video request related to the associated caption; and
presenting, on a user interface of the user device, the video clip in response to receiving the user input based on the associated caption being transferred to the video clip; or
the method, further comprising:
determining a match threshold value based on a number of video clips having the associated caption stored in the video captioning dataset; and
wherein the associated caption is transferred to a second frame in the plurality of frames of the first video when a second similarity value between the captioned image and the second frame exceeds the match threshold value.

4. The method of any preceding claim, wherein the similarity value between the captioned image and the first frame is calculated by determining an L2-distance between the feature vector of the first frame and the feature vector of the captioned image.

5. The method of any of claims 1 to 3, wherein the similarity value between the captioned image and the first frame is calculated using an artificial neural network trained on image classification; or
wherein the similarity value between the captioned image and the first frame is calculated using a dot product similarity technique.

6. The method of any preceding claim, further comprising:
determining, by the computing system, a feature vector of a second frame in the plurality of frames of the first video;
calculating, by the computing system, a second similarity value between the captioned image and the second frame based on a comparison between the feature vector of the captioned image and the feature vector of the second frame; and
transferring, by the computing system, the associated caption to the second frame when the second similarity value exceeds a match threshold value.

7. The method of claim 6, wherein the feature vector of the second frame is further determined based on the feature vector of the first frame.

8. The method of claims 6 or 7, wherein the plurality of frames of the first video are generated based on a first video frame rate, the method further comprising:
selecting the second frame based on a reduced video frame rate, the reduced video frame rate being less than the first video frame rate.

9. The method of any of claims 6 to 8, wherein the first frame includes a first timestamp, and wherein the second frame includes a second timestamp, the method further comprising:
determining a time span based on the first timestamp and the second timestamp;
generating a video clip of the first video, wherein the first video is shortened based on the time span to generate the video clip; and
labeling the video clip with the labeled caption.

10. The method of any preceding claim, further comprising:
accessing a lookup table based on the associated caption, the lookup table having a plurality of captions that are related to the associated caption;
labeling, using the lookup table, the first frame with a new caption from the plurality of captions; and
selecting the first video from the set of videos based on the lookup table.

11. The method of any preceding claim, further comprising:
determining that a third frame in the plurality of frames of the first video does not have a caption; and
generating a new video based on the first video, wherein the third frame is deleted from the first video to generate the new video.

12. The method of any preceding claim, further comprising:
generating, by the computing system, an audio file of the first video based on the first frame, the audio file being labeled with the associated caption;
receiving a user input, from a user device, the user input indicating an audio request the associated caption; and
outputting, on a speaker of the user device, the audio file in response to receiving the user input.

13. The method of any preceding claim, further comprising:
selecting, by the computing system, a second video from the set of videos;
extracting, by the computing system, a feature vector of a new frame of the second video;
calculating, by the computing system, a new similarity value between the captioned image and the new frame based on the feature vector of the captioned image and the feature vector of the new frame; and
transferring, by the computing system, a related caption that is similar to the associated caption to the new frame based on the new similarity value, the related caption being different than the associated caption.

14. A system comprising one or more processors (112; 132; 152) and a memory (114; 134; 154), the memory storing computer readable instructions that, when executed by the one or more processors, cause the system to perform the operations of the computer implemented method of any of claims 1 to 13.

15. A computer program product comprising computer readable instructions that, when executed by a computing apparatus (10; 50; 102; 130; 150; 240), cause the computing apparatus to perform the operations the computer implemented method of any of claims 1 to 13.

## Patentansprüche

1. Computerimplementiertes Verfahren zum Verbessern eines Abrufsystems, wobei das Verfahren Folgendes umfasst:
Erhalten (402), durch ein Rechensystem (10, 50, 240), eines beschrifteten Bildes, wobei das beschriftete Bild ein Bild und eine zugehörige Beschriftung aufweist;
Erhalten (404), durch das Rechensystem (10, 50, 240), eines ersten Videos aus einer Menge von Videos, wobei das erste Video eine Mehrzahl von Einzelbildern aufweist, wobei jedes Video in der Menge von Videos einen Indexwert für die zugehörige Beschriftung aufweist, wobei das Erhalten ferner Folgendes umfasst:
Erhalten, durch das Rechensystem (10, 50, 240), einer Menge von Bildern aus einem Bildbeschriftungsdatensatz, wobei die Menge von Bildern das beschriftete Bild aufweist; und
Auswählen des ersten Videos aus der Menge von Videos auf der Grundlage des Indexwerts des ersten Videos für die zugehörige Beschriftung;
Bestimmen (406), durch das Rechensystem (10, 50, 240), eines Merkmalsvektors des beschrifteten Bildes;
Bestimmen (408), durch das Rechensystem (10, 50, 240), eines Merkmalsvektors eines ersten Einzelbildes in der Mehrzahl von Einzelbildern des ersten Videos;
Berechnen (410), durch das Rechensystem (10, 50, 240), eines Ähnlichkeitswerts zwischen dem beschrifteten Bild und dem ersten Einzelbild auf der Grundlage des Merkmalsvektors des beschrifteten Bildes und des Merkmalsvektors des ersten Einzelbildes; und
Übertragen (412), durch das Rechensystem (10, 50, 240), der zugehörigen Beschriftung auf das erste Einzelbild auf der Grundlage des Ähnlichkeitswerts.

2. Verfahren nach Anspruch 1, ferner umfassend:
Erzeugen eines Videoclips des ersten Videos auf der Grundlage des ersten Einzelbildes;
Speichern des Videoclips in einer Videobeschriftungsdatenbank; und
Übertragen der zugehörigen Beschriftung auf den Videoclip auf der Grundlage des Ähnlichkeitswerts und eines Übereinstimmungs-Schwellenwerts.

3. Verfahren nach Anspruch 2, ferner umfassend:
Empfangen einer Benutzereingabe von einer Benutzervorrichtung, wobei die Benutzereingabe eine Videoanforderung in Bezug auf die zugehörige Beschriftung angibt; und
Darstellen des Videoclips auf einer Benutzeroberfläche der Benutzervorrichtung als Reaktion auf das Empfangen der Benutzereingabe auf der Grundlage dessen, dass die zugehörige Beschriftung auf den Videoclip übertragen wurde; oder
das Verfahren, ferner umfassend:
Bestimmen eines Übereinstimmungs-Schwellenwerts auf der Grundlage einer Anzahl von Videoclips, die die zugehörige Beschriftung aufweisen und in dem Videobeschriftungsdatensatz gespeichert sind; und
wobei die zugehörige Beschriftung auf ein zweites Einzelbild in der Mehrzahl von Einzelbildern des ersten Videos übertragen wird, wenn ein zweiter Ähnlichkeitswert zwischen dem beschrifteten Bild und dem zweiten Einzelbild den Übereinstimmungs-Schwellenwert überschreitet.

4. Verfahren nach einem vorhergehenden Anspruch, wobei der Ähnlichkeitswert zwischen dem beschrifteten Bild und dem ersten Einzelbild durch Bestimmen eines L2-Abstands zwischen dem Merkmalsvektor des ersten Einzelbildes und dem Merkmalsvektor des beschrifteten Bildes berechnet wird.

5. Verfahren nach einem der Ansprüche 1-3, wobei der Ähnlichkeitswert zwischen dem beschrifteten Bild und dem ersten Einzelbild unter Verwendung eines künstlichen neuronalen Netzwerks berechnet wird, das auf Bildklassifizierung trainiert ist; oder
wobei der Ähnlichkeitswert zwischen dem beschrifteten Bild und dem ersten Einzelbild unter Verwendung einer Skalarprodukt-Ähnlichkeitstechnik berechnet wird.

6. Verfahren nach einem vorhergehenden Anspruch, ferner umfassend:
Bestimmen, durch das Rechensystem, eines Merkmalsvektors eines zweiten Einzelbildes in der Mehrzahl von Einzelbildern des ersten Videos;
Berechnen, durch das Rechensystem, eines zweiten Ähnlichkeitswerts zwischen dem beschrifteten Bild und dem zweiten Einzelbild auf der Grundlage eines Vergleichs zwischen dem Merkmalsvektor des beschrifteten Bildes und dem Merkmalsvektor des zweiten Einzelbildes; und
Übertragen, durch das Rechensystem, der zugehörigen Beschriftung auf das zweite Einzelbild, wenn der zweite Ähnlichkeitswert einen Übereinstimmungs-Schwellenwert überschreitet.

7. Verfahren nach Anspruch 6, wobei der Merkmalsvektor des zweiten Einzelbildes ferner auf der Grundlage des Merkmalsvektors des ersten Einzelbildes bestimmt wird.

8. Verfahren nach Ansprüchen 6 oder 7, wobei die Mehrzahl von Einzelbildern des ersten Videos auf der Grundlage einer ersten Videobildrate erzeugt wird, wobei das Verfahren ferner Folgendes umfasst:
Auswählen des zweiten Einzelbildes auf der Grundlage einer reduzierten Videobildrate, wobei die reduzierte Videobildrate geringer als die erste Videobildrate ist.

9. Verfahren nach einem der Ansprüche 6-8, wobei das erste Einzelbild einen ersten Zeitstempel aufweist und wobei das zweite Einzelbild einen zweiten Zeitstempel aufweist, wobei das Verfahren ferner Folgendes umfasst:
Bestimmen einer Zeitspanne auf der Grundlage des ersten und des zweiten Zeitstempels;
Erzeugen eines Videoclips des ersten Videos, wobei das erste Video auf der Grundlage der Zeitspanne gekürzt wird, um den Videoclip zu erzeugen; und
Kennzeichnen des Videoclips mit der gekennzeichneten Beschriftung.

10. Verfahren nach einem vorhergehenden Anspruch, ferner umfassend:
Zugreifen auf eine Nachschlagetabelle auf der Grundlage der zugehörigen Beschriftung, wobei die Nachschlagetabelle eine Mehrzahl von Beschriftungen aufweist, die mit der zugehörigen Beschriftung in Beziehung stehen;
Kennzeichnen des ersten Einzelbildes mit einer neuen Beschriftung aus der Mehrzahl von Beschriftungen unter Verwendung der Nachschlagetabelle; und
Auswählen des ersten Videos aus der Menge von Videos auf der Grundlage der Nachschlagetabelle.

11. Verfahren nach einem vorhergehenden Anspruch, ferner umfassend:
Bestimmen, dass ein drittes Einzelbild in der Mehrzahl von Einzelbildern des ersten Videos keine Beschriftung aufweist; und
Erzeugen eines neuen Videos auf der Grundlage des ersten Videos, wobei das dritte Einzelbild aus dem ersten Video gelöscht wird, um das neue Video zu erzeugen.

12. Verfahren nach einem vorhergehenden Anspruch, ferner umfassend:
Erzeugen, durch das Rechensystem, einer Audiodatei des ersten Videos auf der Grundlage des ersten Einzelbildes, wobei die Audiodatei mit der zugehörigen Beschriftung gekennzeichnet wird;
Empfangen einer Benutzereingabe von einer Benutzervorrichtung, wobei die Benutzereingabe eine Audioanforderung nach der zugehörigen Beschriftung angibt; und
Ausgeben der Audiodatei über einen Lautsprecher der Benutzervorrichtung als Reaktion auf das Empfangen der Benutzereingabe.

13. Verfahren nach einem vorhergehenden Anspruch, ferner umfassend:
Auswählen, durch das Rechensystem, eines zweiten Videos aus der Menge von Videos;
Extrahieren, durch das Rechensystem, eines Merkmalsvektors eines neuen Einzelbildes des zweiten Videos;
Berechnen, durch das Rechensystem, eines neuen Ähnlichkeitswerts zwischen dem beschrifteten Bild und dem neuen Einzelbild auf der Grundlage des Merkmalsvektors des beschrifteten Bildes und des Merkmalsvektors des neuen Einzelbildes; und
Übertragen, durch das Rechensystem, einer verwandten Beschriftung, die der zugehörigen Beschriftung ähnlich ist, auf das neue Einzelbild auf der Grundlage des neuen Ähnlichkeitswerts, wobei sich die verwandte Beschriftung von der zugehörigen Beschriftung unterscheidet.

14. System, umfassend einen oder mehrere Prozessoren (112; 132; 152) und einen Speicher (114; 134; 154), wobei der Speicher computerlesbare Anweisungen speichert, die bei Ausführung durch den einen oder die mehreren Prozessoren das System veranlassen, die Vorgänge des computerimplementierten Verfahrens nach einem der Ansprüche 1-13 durchzuführen.

15. Computerprogrammprodukt, umfassend computerlesbare Anweisungen, die bei Ausführung durch eine Rechenvorrichtung (10; 50; 102; 130; 150; 240) die Rechenvorrichtung veranlassen, die Vorgänge des computerimplementierten Verfahrens nach einem der Ansprüche 1-13 durchzuführen.

## Revendications

1. Procédé mis en œuvre par ordinateur pour améliorer un système de récupération, le procédé comprenant :
l'obtention (402), par un système informatique (10, 50, 240), d'une image légendée, l'image légendée ayant une image et une légende associée ;
l'obtention (404), par le système informatique (10, 50, 240), d'une première vidéo à partir d'un ensemble de vidéos, la première vidéo ayant une pluralité de trames, dans lequel chaque vidéo dans l'ensemble de vidéos a un score d'index pour la légende associée, ladite obtention comprenant en outre :
l'obtention, par le système informatique (10, 50, 240), d'un ensemble d'images à partir d'un ensemble de données de légendage d'images, l'ensemble d'images ayant l'image légendée ; et
la sélection de la première vidéo à partir de l'ensemble de vidéos sur la base du score d'index de la première vidéo pour la légende associée ;
la détermination (406), par le système informatique (10, 50, 240), d'un vecteur de caractéristiques de l'image légendée ;
la détermination (408), par le système informatique (10, 50, 240), d'un vecteur de caractéristiques d'une première trame dans la pluralité de trames de la première vidéo ;
le calcul (410), par le système informatique (10, 50, 240), d'une valeur de similarité entre l'image légendée et la première trame sur la base du vecteur de caractéristiques de l'image légendée et du vecteur de caractéristiques de la première trame ; et
le transfert (412), par le système informatique (10, 50, 240), de la légende associée à la première trame sur la base de la valeur de similarité.

2. Procédé selon la revendication 1, comprenant en outre :
la génération d'un clip vidéo de la première vidéo sur la base de la première trame ;
le stockage du clip vidéo dans une base de données de légendage vidéo ; et
le transfert de la légende associée au clip vidéo sur la base de la valeur de similarité et d'une valeur seuil de correspondance.

3. Procédé selon la revendication 2, comprenant en outre :
la réception d'une entrée utilisateur, à partir d'un dispositif utilisateur, ladite entrée indiquant une requête vidéo liée à la légende associée ; et
la présentation, sur une interface utilisateur du dispositif utilisateur, du clip vidéo en réponse à la réception de l'entrée utilisateur sur la base du transfert de la légende associée au clip vidéo ; ou
le procédé comprenant en outre :
la détermination d'une valeur seuil de correspondance sur la base d'un nombre de clips vidéo dont la légende associée est stockée dans l'ensemble de données de légendage vidéo ; et
dans lequel la légende associée est transférée à une deuxième trame à partir de la pluralité de trames de la première vidéo lorsqu'une seconde valeur de similarité entre l'image légendée et la deuxième trame dépasse la valeur seuil de correspondance.

4. Procédé selon une quelconque revendication précédente, dans lequel la valeur de similarité entre l'image légendée et la première trame est calculée en déterminant une distance L2 entre le vecteur de caractéristiques de la première trame et le vecteur de caractéristiques de l'image légendée.

5. Procédé selon l'une quelconque des revendications 1 à 3, dans lequel la valeur de similarité entre l'image légendée et la première trame est calculée à l'aide d'un réseau neuronal artificiel entraîné à la classification d'images ; ou
dans lequel la valeur de similarité entre l'image légendée et la première trame est calculée à l'aide d'une technique de similarité de produit scalaire.

6. Procédé selon une quelconque revendication précédente, comprenant en outre :
la détermination, par le système informatique, d'un vecteur de caractéristiques d'une deuxième trame dans la pluralité de trames de la première vidéo ;
le calcul, par le système informatique, d'une seconde valeur de similarité entre l'image légendée et la deuxième trame sur la base d'une comparaison entre le vecteur de caractéristiques de l'image légendée et le vecteur de caractéristiques de la deuxième trame ; et
le transfert, par le système informatique, de la légende associée à la deuxième trame lorsque la seconde valeur de similarité dépasse une valeur seuil de correspondance.

7. Procédé selon la revendication 6, dans lequel le vecteur de caractéristiques de la deuxième trame est en outre déterminé sur la base du vecteur de caractéristiques de la première trame.

8. Procédé selon la revendication 6 ou 7, dans lequel la pluralité de trames de la première vidéo est générée sur la base d'une première fréquence de trames vidéo, le procédé comprenant en outre :
la sélection de la deuxième trame sur la base d'une fréquence de trames vidéo réduite, la fréquence de trames vidéo réduite étant inférieure à la première fréquence de trames vidéo.

9. Procédé selon l'une quelconque des revendications 6 à 8, dans lequel la première trame comporte un premier horodatage et dans lequel la deuxième trame comprend un second horodatage, le procédé comprenant en outre :
la détermination d'un intervalle de temps sur la base du premier horodatage et du second horodatage ;
la génération d'un clip vidéo de la première vidéo, dans lequel la première vidéo est raccourcie sur la base de l'intervalle de temps pour générer le clip vidéo ; et
l'étiquetage du clip vidéo avec la légende étiquetée.

10. Procédé selon une quelconque revendication précédente, comprenant en outre :
l'accès à une table de consultation sur la base de la légende associée, la table de consultation ayant une pluralité de légendes qui sont liées à la légende associée ;
l'étiquetage, à l'aide de la table de consultation, de la première trame avec une nouvelle légende à partir de la pluralité de légendes ; et
la sélection de la première vidéo à partir de l'ensemble de vidéos sur la base de la table de consultation.

11. Procédé selon une quelconque revendication précédente, comprenant en outre :
la détermination qu'une troisième trame dans la pluralité de trames de la première vidéo n'a pas de légende ; et
la génération d'une nouvelle vidéo sur la base de la première vidéo, dans lequel la troisième trame est supprimée de la première vidéo pour générer la nouvelle vidéo.

12. Procédé selon une quelconque revendication précédente, comprenant en outre :
la génération, par le système informatique, d'un fichier audio de la première vidéo sur la base de la première trame, le fichier audio étant étiqueté avec la légende associée ;
la réception d'une entrée utilisateur, à partir d'un dispositif utilisateur, l'entrée indiquant une requête audio concernant la légende associée ; et
la diffusion, sur un haut-parleur du dispositif utilisateur, du fichier audio en réponse à la réception de l'entrée utilisateur.

13. Procédé selon une quelconque revendication précédente, comprenant en outre :
la sélection, par le système informatique, d'une seconde vidéo à partir de l'ensemble des vidéos ;
l'extraction, par le système informatique, d'un vecteur de caractéristiques d'une nouvelle trame de la seconde vidéo ;
le calcul, par le système informatique, d'une nouvelle valeur de similarité entre l'image légendée et la nouvelle trame sur la base du vecteur de caractéristiques de l'image légendée et du vecteur de caractéristiques de la nouvelle trame ; et
le transfert, par le système informatique, d'une légende connexe qui est similaire à la légende associée vers la nouvelle trame sur la base de la nouvelle valeur de similarité, la légende connexe étant différente de la légende associée.

14. Système comprenant un ou plusieurs processeurs (112 ; 132 ; 152) et une mémoire (114 ; 134 ; 154), la mémoire stockant des instructions lisibles par ordinateur qui, lorsqu'elles sont exécutées par les un ou plusieurs processeurs, amènent le système à réaliser les opérations du procédé mis en œuvre par ordinateur selon l'une quelconque des revendications 1 à 13.

15. Produit de programme informatique comprenant des instructions lisibles par ordinateur qui, lorsqu'elles sont exécutées par un appareil informatique (10 ; 50 ; 102 ; 130 ; 150 ; 240), amènent l'appareil informatique à réaliser les opérations du procédé mis en œuvre par ordinateur selon l'une quelconque des revendications 1 à 13.
